# EUROPÄISCHE PATENTSCHRIFT

(11) **EP 4 208 944 B1**
(45) Veröffentlichungstag und Bekanntmachung des Hinweises auf die Patenterteilung: **14.05.2025**
(21) Anmeldenummer: 21766659.3
(22) Anmeldetag: 27.08.2021
(51) Int. Cl.: H02S 50/15

(54) **VERFAHREN UND SYSTEM ZUR BEWERTUNG VON SOLARZELLEN**
METHOD AND SYSTEM FOR ASSESSING SOLAR CELLS
PROCÉDÉ ET SYSTÈME D'ÉVALUATION DE CELLULES SOLAIRES

(30) Priorität: 01.09.2020 DE 102020210999
(43) Veröffentlichungstag der Anmeldung: 12.07.2023
(73) Patentinhaber: Forschungszentrum Jülich GmbH, 52425 Jülich (DE); Friedrich-Alexander-Universität Erlangen-Nürnberg, 91054 Erlangen (DE)
(72) Erfinder: DOLL, Bernd, 90762 Fürth (DE); PETERS, Ian Marius, 90607 Rückersdorf (DE); BUERHOP-LUTZ, Claudia, 90607 Rückersdorf (DE); BRABEC, Christoph, 90403 Nürnberg (DE)
(74) Vertreter: Gille Hrabal Partnerschaftsgesellschaft mbB Patentanwälte
(86) Internationale Anmeldenummer: PCT/EP2021/073737
(87) Internationale Veröffentlichungsnummer: WO 2022/049000

(56) Entgegenhaltungen:
- WO-A1-2015/016016
- WO-A1-2020/002791

## Beschreibung

Die vorliegende Erfindung betrifft ein Verfahren für eine Bewertung der Qualität von Solarzellen einer Fotovoltaikanlage. Die Erfindung betrifft auch ein System zur Bewertung von Solarzellen.

Fotovoltaikanlagen umfassen in der Regel eine Vielzahl von Solarmodulen. Ein Solarmodul ist eine bauliche Einheit, die eine Vielzahl von Solarzellen umfasst. Um hinreichend hohe elektrische Spannungen erzeugen zu können, sind Solarzellen eines Solarmoduls elektrisch seriell miteinander verbunden.

Ein Verfahren zur Messung und Bewertung von Leistungsverlusten bei Fotovoltaikanlagen ist aus der Druckschrift EP 2 942 634 A1 bekannt.

Weiterer Stand der Technik zu diesem Gebiet ist aus den Druckschriften WO 2010/130013 A1, AU 2016431057 A1, WO 2011/079353 A1, US 2011/0234790 A1, EP 3208937 B1 und US 9641125 B2 bekannt. Druckschrift WO 2020 / 002 791 A1 offenbart ein Testgerät für die Prüfung von Solarzellen eines Satelliten oder einer Drohne, welches die Solarzellen für Testzwecke beleuchtet und den durch das Beleuchten erzeugten elektrischen Strom analysiert, um den Zustand der Solarzellen zu prüfen.

Es besteht Bedarf für eine Bewertung einer Fotovoltaikanlage, wenn diese nach ihrer Installation abgenommen werden soll, wenn eine bereits fertig installierte Fotovoltaikanlage verkauft werden soll oder wenn Schäden bei einer Versicherung geltend gemacht werden. Turnusmäßige Wartungsmessungen zur zuverlässigen Energieproduktion, Ursachenanalysen oder Feststellung von Transportschäden umfassen ebenfalls Bewertungen von Fotovoltaikanlagen oder Modulen davon.

Mit zunehmender Anzahl und Größe von PV Anlagen gewinnen Bewertungsverfahren, die automatisierbar und hochdurchsatzfählg sind, an Bedeutung.

Besonders geeignet für die vorgenannten Zwecke sind optische Methoden, die mit Hilfe bildgebender Verfahren arbeiten, und die in unbemannten Vehikeln (etwa Drohnen) eingesetzt werden können. Insbesondere eignet sich dafür ein Fotolumineszenz (PL) - Verfahren.

Lumineszenz-Verfahren werden zwischen Elektrolumineszenz (EL) und Fotolumineszenz (PL) unterschieden. Grundlage beider Verfahren ist die Erzeugung von Ladungsträgern in Solarmodulen, die rekombinieren und die dann Licht mit der Energie der Bandlücke (bei Silizium ca. 1,1 eV oder ca. 1130 nm) aussenden. Das ausgesendete Licht wird mit einer für die entsprechenden Wellenlängen geeigneten Kamera aufgenommen. Das so erhaltene Foto wird ausgewertet, um Solarzellen zu bewerten. Eine nicht mehr funktionstüchtige Solarzelle sendet kein Licht. Dunkle Bereiche eines erhaltenen Fotos können daher nicht mehr funktionstüchtige Solarzellen oder zumindest nicht mehr vollständig funktionstüchtige Solarzellen anzeigen.

Der Hauptunterschied der beiden Verfahren ist die Art der Anregung. Bei der Elektrolumineszenz erfolgt die Anregung elektrisch. Bei der Fotolumineszenz erfolgt die Anregung durch Licht. Eine Elektrolumineszenz - Messung benötigt folglich einen Eingriff in den Stromkreis, welcher durch die Verwendung von Fotolumineszenz vermieden werden kann.

Fotolumineszenz - Verfahren werden zurzeit nur im Labor verwendet. Ziel dieser Erfindung ist die Entwicklung eines mobilen, zum Außeneinsatz tauglichen Fotolumineszenz - Verfahrens und eines Systems zur Durchführung des Verfahrens.

Um dieses Ziel zu erreichen, umfasst ein Verfahren die Merkmale des ersten Anspruchs. Ein System zur Durchführung des Verfahrens umfasst die Merkmale des Nebenanspruchs. Vorteilhafte Ausgestaltungen ergeben sich aus den abhängigen Ansprüchen.

Das Verfahren umfasst die Verwendung einer Beleuchtungseinrichtung, die ein oder mehrere Lichtquellen umfasst. Es handelt sich insbesondere um elektrische Lichtquellen. Eine solche Lichtquelle sendet also Licht im Fall einer hinreichenden Stromversorgung aus.

Die ein oder mehreren Lichtquellen sind an einer Befestigungseinrichtung befestigt. Durch die Befestigungseinrichtung wird erreicht, dass die Lichtquellen über die Befestigungseinrichtung miteinander mechanisch verbunden sind. Die Befestigungseinrichtung kann eine Stange oder ein Rohr sein. Die Befestigungseinrichtung kann mehrere Stangen und/oder Rohre umfassen, die miteinander verbunden sind. Die Befestigungseinrichtung kann ein flächiges Gebilde sein oder ein flächiges Gebilde umfassen. Die Befestigungseinrichtung kann beispielsweise aus Kunststoff und/oder aus Metall bestehen. Die Befestigungseinrichtung kann aus mehreren Einzelteilen bestehen, die beispielsweise über ein oder mehrere Schraubverbindungen, ein oder mehrere Klebeverbindungen, ein oder mehrere Schweißverbindungen und/oder ein oder mehrere Nietverbindungen miteinander verbunden sind. Die Befestigungseinrichtung kann aus einem Stück gefertigt worden sein. Besteht die Befestigungseinrichtung aus mehreren Teilen, die lösbar miteinander verbunden sind, so kann diese zerlegt werden, um die Befestigungseinrichtung mit daran befestigten Komponenten leichter transportieren zu können. Die Befestigungseinrichtung kann eine Aufhängung umfassen, um die Befestigungseinrichtung beispielsweise an einem Ständer befestigen zu können. Die Befestigungseinrichtung kann beweglich mit dem Ständer verbunden sein, um die Befestigungseinrichtung bei fest aufgestelltem Ständer ausrichten zu können. Die Befestigungseinrichtung kann ein oder mehrere Scharniere umfassen, um die Geometrie der Befestigungseinrichtung bei Bedarf an die zu bewertende Situation anpassen zu können.

Die ein oder mehreren Lichtquellen sind beweglich an der Befestigungseinrichtung befestigt und/oder es ist eine Lichtstärken - Regelung vorhanden, mit der die Lichtstärke einer jeden Lichtquelle individuell geändert werden kann. Die Helligkeit des Lichts kann also verändert werden. Die ein oder mehreren Lichtquellen können also beispielsweise verschwenkt werden. Insbesondere können die ein oder mehreren Lichtquellen dann nicht nur zweidimensional, sondern auch in einer dritten Dimension verschwenkt werden. Durch die bewegliche Anbringung soll erreicht werden, dass durch Bewegen der Lichtquelle relativ zur Befestigungseinrichtung verschiedene Bereiche eines Solarmoduls beleuchtet werden können. In einer dafür geeigneten Weise ist die Beweglichkeit beschaffen. Durch die Beweglichkeit soll es möglich sein, ein oder mehrere Lichtquellen so auszurichten, dass dadurch eine gewünschte Fläche eines Solarmoduls gleichmäßig beleuchtet wird. Um eine gewünschte Fläche gleichmäßig in gewünschter Weise beleuchten zu können, ist alternativ oder ergänzend vorgesehen, dass die Lichtstärke einer jeden Lichtquelle individuell geändert werden kann. Gibt es also zwei Lichtquellen, so kann die Lichtstärke der einen Lichtquelle verändert werden, ohne dass dies die Lichtstärke der anderen Lichtquelle beeinflusst. Auch dadurch soll erreicht werden, dass eine gewünschte Fläche eines Solarmoduls gleichmäßig beleuchtet werden kann.

An der Befestigungseinrichtung ist eine Kamera befestigt. Die Kamera ist so ausgewählt, dass diese ein Foto von der Strahlung aufnehmen kann, die von Solarzellen gesendet werden, wenn Ladungsträger rekombinieren. Die Kamera kann beweglich oder unbeweglich mit der Befestigungseinrichtung verbunden sein.

Grundsätzlich ist es auch möglich, die Kamera losgelöst von der Beleuchtungseinheit mit den ein oder mehreren Lichtquellen zu betreiben. Die Kamera kann zu diesem Zweck beispielsweise durch einen Schnellverschluss lösbar mit der Befestigungseinrichtung verbunden sein, um die Kamera schnell und ohne Werkzeug abnehmen zu können, wenn die Situation dies vorteilhaft erscheinen lässt.

Das Verfahren umfasst folgende Schritte:
Die Befestigungseinrichtung wird mithilfe der Kamera relativ zu den zu bewertenden Solarzellen so ausgerichtet, dass die Kameraachse der Kamera möglichst senkrecht relativ zur Oberfläche der zu bewertenden Solarzellen verläuft, also senkrecht auf die Oberfläche der Solarzellen auftrifft. Als Kameraachse wird die "Blickrichtung" der Kamera bezeichnet. Sind mehrere Lichtquellen um die Kamera herum verteilt angeordnet, dann wird die Kameraachse vorzugsweise so ausgerichtet, dass diese auf die Mitte des durch Solarzellen gebildeten Bereichs zuläuft, der bewertet werden soll.

Ist die Kamera beweglich an der Befestigungseinrichtung befestigt, so kann durch Bewegen der Kamera relativ zur Befestigungseinrichtung eine Ausrichtung erfolgen. Ist die Kamera unbeweglich mit der Befestigungseinrichtung verbunden, so wird die Kamera durch Bewegen der Befestigungseinrichtung ausgerichtet.

Die ein oder mehreren Lichtquellen werden vorzugsweise so ausgerichtet und / oder die Lichtstärke der ein oder mehreren Lichtquellen werden vorzugsweise so geregelt, dass die zu bewertenden Solarzellen möglichst gleichmäßig ausgeleuchtet werden. Mit möglichst gleichmäßig ist so gut wie möglich gemeint, da gewisse Schwankungen nie vollständig vermieden werden können. Im Allgemeinen werden die Lichtquellen ausgerichtet, nachdem die Kamera relativ zu den zu bewertenden Solarzellen ausgerichtet worden ist. Wenn es aber möglich ist, die Kamera in idealer Weise auszurichten, sodass die Kameraachse genau senkrecht auf den zu bewertenden Bereich auftrifft, dann können die Lichtquellen auch vorher ausgerichtet worden sein. Auch ist es dann grundsätzlich nicht erforderlich, unterschiedliche Lichtstärken für unterschiedliche Lichtquellen vorzusehen. In diesem Fall kann die Lichtstärke einheitlich für jede Lichtquelle vor der Ausrichtung der Kamera eingestellt worden sein. Es kann eine standardisierte Voreinstellung für die Ausrichtung der Lichtquellen geben. Ist die Kameraachse in idealer Weise ausgerichtet, dann genügt die standardisierte Voreinstellung. Die standardisierte Voreinstellung kann beispielsweise durch Rastpunkte festgelegt sein. Befinden sich die Lichtquellen in ihrer standardisierten Voreinstellung, so werden die Lichtquellen durch eine Rastverbindung in dieser Stellung gehalten. Durch Anwenden einer hinreichend hohen Kraft können die Lichtquellen aus der Raststellung dann herausbewegt werden.

Im Anschluss an die möglichst gleichmäßige Ausleuchtung wird mit der Kamera ein Foto von den zu bewertenden Solarzellen aufgenommen. Die Kamera ist grundsätzlich eine Digitalkamera, da diese sofort ein Foto, also ein Bild, bereitstellen kann, ohne dass ein Film zuvor entwickelt werden muss. Auch kann ein Foto einer Digitalkamera besonders einfach automatisiert ausgewertet werden.

Mithilfe des aufgenommenen Bildes bzw. Fotos werden die Solarzellen bewertet. Es wird also insbesondere geprüft, wo auf dem Foto helle und dunkle Bereiche zu sehen sind. Beispielsweise dunkle Bereiche können Defekte anzeigen.

Von der Erfindung ist auch umfasst, dass die Lichtquellen und/oder die Lichtstärken nicht so ausgerichtet bzw. geregelt werden, dass möglichst homogen ausgeleuchtet wird. Beispiele für ein Abweichen von dem Grundsatz einer möglichst homogenen Beleuchtung werden nachfolgend beschrieben.

Vorzugsweise sind mehrere Lichtquellen vorhanden, die in einer Ebene angeordnet sind. Es ist bei einer solchen Anordnung technisch leichter möglich, eine gewünschte Fläche, die durch Solarzellen gebildet wird, gleichmäßig auszuleuchten. Vorzugsweise sind dann die mehreren Lichtquellen um die Kamera herum angeordnet, um sehr gleichmäßig ausleuchten zu können. Vorzugsweise weisen benachbarte Lichtquellen untereinander gleiche Abstände auf, um auf technisch einfache Weise sehr gleichmäßig ausleuchten zu können.

Vorzugsweise sind nicht mehr als zwanzig Lichtquellen vorhanden, um den technischen Aufwand nicht übermäßig groß werden zu lassen. Vorzugsweise sind wenigstens vier Lichtquellen vorhanden, um ein Solarmodul üblicher Größe hinreichend gleichmäßig und vollständig beleuchten zu können. Eine jede Lichtquelle kann eine große Vielzahl von LEDs umfassen, so zum Beispiel 50 bis 150 LEDs.

Vorzugsweise sind LEDs zur Erzeugung von Licht eingesetzt. Das Gewicht der Befestigungseinrichtung mit den daran befestigten Komponenten (Kamera und ein oder mehrere Lichtquellen) kann so geringgehalten werden.

Es kann ein Beamer als Lichtquelle eingesetzt sein, um gleichmäßig ausleuchten zu können. Sind mehrere Lichtquellen vorhanden, dann kann jede Lichtquelle ein Beamer sein.

Die ein oder mehreren Lichtquellen weisen vorzugsweise jeweils einen Kurzpassfilter für das erzeugte Licht auf. Durch den Kurzpassfilter wird erreicht, dass kurzwelliges Licht aus den Lichtquellen austreten kann. Langwelliges Licht wird dagegen herausgefiltert. Die Kamera weist dann einen Langpassfilter für das von den Solarzellen durch Rekombination von Ladungsträgern erzeugte Licht auf. Durch den Langpassfilter wird erreicht, dass nur langwelliges Licht von dem lichtempfindlichen Material der Kamera aufgenommen werden kann. Hierdurch wird erreicht, dass Lichtreflexionen durch die Oberfläche von Solarzellen das Ergebnis nicht verfälschen. Durch die Oberfläche von Solarzellen wird nämlich nur kurzwelliges Licht reflektiert, wenn die ein oder mehreren Lichtquellen nur kurzwelliges Licht aussenden und es keine weiteren Lichtquellen gibt. Eine Lichtstrahlung der Solarzellen, die auf der Rekombination von Ladungsträgern beruht, umfasst zumindest überwiegend langwelliges Licht.

Das lichtempfindliche Material der Kamera ist vorzugsweise lichtempfindliches Silizium (Si) oder lichtempfindliches Indium Gallium Arsenid (InGaAs). Diese Materialien sind geeignet, um langwelliges Licht zu detektieren, die von Solarzellen im Fall einer Rekombination von Ladungsträgern ausgesendet werden. Die lichtempfindlichen Materialien wirken also als Detektor für Licht.

In einer Ausgestaltung soll in Aufsicht gesehen ein rechteckiges Solarmodul bewertet werden, dass also die zu bewertenden Solarzellen umfasst. Die Befestigungseinrichtung wird dann so ausgerichtet, dass das Solarmodul auf einem mit der Kamera gemachten Foto möglichst rechteckförmig gezeigt wird. Je besser diese Form erreicht wird, umso besser ist die Kamera ausgerichtet. Entsprechendes gilt für andere Formen. Sollte ein Solarmodul also beispielsweise kreisförmig sein, dann wird die Kamera so ausgerichtet, dass auf einem Foto das Solarmodul in der gleichen Kreisform gezeigt wird. In diesem Fall ist die Kameraachse genau senkrecht zur Oberfläche ausgerichtet. Da eine solche ideale Ausrichtung allerdings häufig nicht möglich ist, gibt es zusätzlich die Möglichkeit, die Lichtstärke von Lichtquellen zu verändern und/oder die Lichtquellen auszurichten, sodass auf diese Weise schließlich eine hinreichend gleichmäßige Ausleuchtung gelingt. Eine hinreichend gleichmäßige Ausleuchtung liegt vor, wenn diese derart gleichmäßig ist, dass die Leistungsfähigkeit von Solarzellen anhand eines durch die Kamera gemachten Fotos beurteilt werden kann.

Die Befestigungseinrichtung kann an einer Drohne befestigt sein. Die Ausrichtung der Befestigungseinrichtung kann durch die Drohne erfolgen. Die Befestigungseinrichtung kann

Teil der Drohne sein, also eine Doppelfunktion übernehmen. Die Befestigungseinrichtung kann also beispielsweise auch das Gehäuse der Drohne sein. Mithilfe einer Drohne kann besonders schnell eine Fotovoltaikanlage bewertet werden, selbst wenn diese schwierig erreichbar sein sollte.

In einer Ausgestaltung sind im Fall einer Drohne keine aktiven eigenen Lüfter der Lichtquellen vorhanden. Stattdessen sind die Lichtquellen dann vorzugsweise so angeordnet, dass der Abwind des Fluggeräts für eine ausreichende Kühlung sorgt. Das Gewicht wird vorteilhaft geringgehalten.

Die Stromversorgung für die Kamera und für die ein oder mehreren Lichtquellen kann im Fall einer Drohne intern über den Akku der Drohne erfolgen. Es ist aber auch eine separate Stromversorgung, also ein zweiter Akku möglich.

In einer Ausgestaltung können die ein oder mehreren Lichtquellen und/oder die Kamera mit Hilfe von ein oder mehreren Antrieben bewegt werden. Die Lichtquellen können dann motorisiert ausgerichtet werden. Es ist dann auch möglich, automatisiert auszurichten. Als Antrieb eignet sich insbesondere ein elektrischer Antrieb, also zum Beispiel ein Elektromotor. Ein Antrieb kann ein Linearantrieb sein.

Die Lichtquellen und/oder die Kamera können durch ein Kugelgelenk an der Befestigungseinrichtung befestigt sein.

Die Lichtquellen und/oder die Kamera sind vorzugsweise durch zwei Achsen an der Befestigungseinrichtung befestigt und können um jede Achse verschwenkt werden. Die beiden Achsen schließen vorzugsweise einen rechten Winkel ein, um die Lichtquellen und/oder die Kamera in drei Raumrichtungen verschwenken zu können. Dieser Ausgestaltung erleichtert eine Ausrichtung durch einen Elektromotor.

In einer Ausgestaltung sind ein oder mehrere Abstandshalter vorhanden. Mithilfe der ein oder mehreren Abstandshalter wird die Befestigungseinrichtung ausgerichtet. Ein Abstandshalter kann ein Stab sein oder einen Stab umfassen. Ein Abstandshalter kann an der Kamera oder an einer Lichtquelle befestigt sein. Ein Abstandshalter ist aus Stabilitätsgründen vorzugsweise an der Befestigungseinrichtung befestigt. Sind mehrere Abstandshalter vorhanden, so zum Beispiel drei oder vier Abstandshalter, so können die Abstandshalter wie die Beine eines Tisches auf der Oberfläche von Solarzellen aufgesetzt werden. Die Abstandshalter sind dann so angeordnet, dass die Kamera in idealer Weise auf die Oberfläche von Solarzellen aufsehen kann, die bewertet werden sollen.

Die Abstandshalter können wie die Beine eines Klapptisches klappbar befestigt sein, um diese für einen Transport einklappen zu können. Im eingeklappten Zustand können die Abstandshalter durch eine Rasteinrichtung gehalten sein. Zwei Abstandshalter können durch ein oder mehrere Streben miteinander verbunden sein, um die Stabilität zu verbessern.

In einer Ausgestaltung werden die Abstandshalter für das Ausrichten auf Solarmodulen aufgesetzt, die benachbart zu einem Solarmodul angeordnet sind, das die zu bewertenden Solarzellen umfasst. Dies ermöglicht es, sämtliche Solarzellen eines Solarmoduls in einem Arbeitsgang zu bewerten, indem das Solarmodul vollflächig gleichmäßig beleuchtet wird und im Anschluss daran die Kamera ein Foto von der gesamten Fläche des Solarmoduls aufnimmt, welches dann ausgewertet wird.

Die ein oder mehreren Abstandshalter können an ihrem unteren Ende Rollen aufweisen, um die Befestigungseinrichtung durch Rollen in eine ideale Position bewegen zu können. Die ein oder mehreren Abstandshalter können an ihrem unteren Ende verbreitert sein, um punktuelle Belastungen von Solarmodulen zu vermeiden, falls Abstandshalter auf Solarmodule aufgestellt werden.

Gibt es während der Durchführung des Verfahrens einen Kontakt zu Solarmodulen oder zum Untergrund, so zum Beispiel durch ein oder mehrere Abstandshalter, so kann eine Bewegung der Befestigungseinrichtung mit Rollen oder Gleitkufen mit und ohne externe Schienen durchgeführt werden. Externe Schienen können für die Durchführung des Verfahrens an oder bei den Modulen befestigt werden. Alternativ können Zwischenräume zwischen Modulen als Schiene verwendet werden.

Das Verfahren wird vorzugsweise automatisiert und zwar gesteuert durch einen Computer durchgeführt. Um das Verfahren automatisiert durchführen zu können, kann im Computer gespeichert sein oder an einem Bildschirm des Computers ausgewählt werden, welche Oberflächenform ein Solarmodul hat, dessen Solarzellen bewertet werden sollen. Sollen also die Solarzellen eines Solarmoduls mit einer rechteckigen Oberfläche bewertet werden, dann kann im Computer die Rechteckform abgespeichert sein oder mithilfe des Bildschirms und einer Eingabeeinrichtung ausgewählt werden. Das Ausrichten erfolgt dann durch Vergleich der Form, die dem Computer durch die mit dem Computer verbundene Kamera übermittelt wird.

Durch den Computer wird die Befestigungseinrichtung so bewegt, bis die übermittelte Form der gespeicherten oder ausgewählten Form maximal ähnlich ist. Im Anschluss daran werden die Lichtquellen so bewegt und/oder die Lichtstärken der Lichtquellen so verändert, bis der Computer mithilfe der Kamera eine möglichst gleichmäßige Ausleuchtung ermittelt hat. Im Anschluss daran wird durch den Computer das Aufnehmen eines Fotos durch die Kamera ausgelöst. Abschließend kann der Computer das Foto auswerten und einen Zustandsbericht ausgeben.

Ist die Befestigungseinrichtung mit einer Drohne verbunden, so steuert der Computer für das Ausrichten den Flug der Drohne. Die Befestigungseinrichtung kann auf einer Oberfläche aufgestellt sein und einen durch einen Antrieb bewegbaren Galgen umfassen, an dem die Kamera und die ein oder mehreren Lichtquellen befestigt sind. Durch den Computer kann dann beispielsweise eine motorisierte Bewegung des Galgens gesteuert werden, umso die Kamera relativ zu den zu bewertenden Solarzellen auszurichten. Alternativ oder ergänzend kann der Computer ein motorisiertes Verschwenken der Kamera steuern.

In einer Ausgestaltung wird beispielsweise für ein Ausrichten der Lichtquellen und/oder für ein Regeln der Lichtstärken der Lichtquellen ein flächiges fluoreszierendes oder phosphoreszierendes Material auf die Solarzellen aufgelegt, die bewertet werden sollen. Im Anschluss an das Auflegen beleuchten die Lichtquellen das flächige fluoreszierende oder phosphoreszierende Material. Trifft nun kurzwelliges Licht auf das fluoreszierende Material oder phosphoreszierende Material auf, so wird zumindest auch langwelliges Licht zurückgestrahlt. Die Lichtquellen werden vorzugsweise ausgeschaltet und ein Foto gemacht, wenn phosphoreszierendes Material aufgelegt worden ist. Es wird so ermöglicht, dass ein Foto von der beleuchteten Fläche durch die Kamera aufgenommen werden kann, welches für eine Überprüfung geeignet ist. Ein solches Foto kann anschließend durch den Computer ausgewertet werden, damit durch den Computer auf technisch einfache Weise ein Ausrichten der Lichtquellen und/oder ein Regeln der Lichtstärken der Lichtquellen gesteuert werden kann, um eine möglichst homogene Ausleuchtung zu erreichen. Ein solches Foto kann aber auch dazu genutzt werden, Inhomogenitätsmessungen mit fluoreszierendem oder phosphoreszierendem Material zur nachträglichen oder Echtzeitanpassung der Fotos vornehmen zu können. Es kann zum Beispiel dann herausgerechnet werden, welche Helligkeitsschwankungen auf Inhomogenitäten der Beleuchtung beruhen, um weiter verbessert Solarzellen bewerten zu können.

Das Verfahren ist für einen Außeneinsatz geeignet. Es können also beispielsweise bereits auf einem Dach eines Gebäudes montierte Solarmodule einer Fotovoltaikanlage bewertet werden, ohne dafür in den Stromkreis der Fotovoltaikanlage eingreifen zu müssen. Das Verfahren wird grundsätzlich bei Dunkelheit durchgeführt, um störende Lichteinflüsse durch die Sonne zu vermeiden.

Äußere Einflüsse wie Bodenunebenheiten, Anstellwinkel von Solarmodulen und Störlichtquellen können durch das Verfahren ausgeglichen werden. Es gelingen also trotz solcher Störungen hinreichend homogene Ausleuchtungen von Solarzellen, um Defekte zuverlässig erkennen zu können.

Die Erfindung betrifft auch ein System für die Durchführung eines Verfahrens mit einer Befestigungseinrichtung und mit an der Befestigungseinrichtung befestigten ein oder mehreren Lichtquellen. Die ein oder mehreren Lichtquellen sind beweglich an der Befestigungseinrichtung angebracht und/oder es ist eine Lichtstärken - Regelung vorhanden, mit der die Lichtstärke einer jeden Lichtquelle individuell geändert werden kann. Eine Kamera ist an der Befestigungseinrichtung befestigt. Die ein oder mehreren Lichtquellen sind so beschaffen, dass diese nur kurzwelliges Licht senden können. Die ein oder mehreren Lichtquellen können daher jeweils einen Kurzpassfilter umfassen, durch den erreicht wird, dass nur kurzwelliges Licht aus den Lichtquellen austreten kann. Die Kamera ist so beschaffen, dass diese nur langwelliges Licht für die Aufnahme eines Fotos empfangen kann. Die Kamera kann daher einen Langpassfilter umfassen, durch den erreicht wird, dass nur langwelliges Licht in die Kamera eintreten kann. Kurzwelliges Licht im Sinne der Erfindung weist eine kürzere Wellenlänge auf als das langwellige Licht.

Eine Drohne kann an der Befestigungseinrichtung befestigt sein. Davon ist auch umfasst, dass die Befestigungseinrichtung zugleich Bestandteil der Drohne ist, also beispielsweise Teil eines Gehäuses der Drohne ist.

Das System umfasst vorzugsweise wenigstens drei oder vier Lichtquellen. Vorzugsweise umfasst das System nicht mehr als zwölf Lichtquellen. In einer Ausgestaltung umfasst das System vier bis acht Lichtquellen. Ein Solarmodul umfasst regelmäßig ca. 60 Solarzellen.

Die zu beleuchtende Fläche eines solchen Solarmoduls beträgt ca. 1,6 m². Mit vier bis zwölf Lichtquellen kann eine solche Fläche hinreichend homogen ausgeleuchtet werden.

Das System kann eine Mehrzahl von lösbaren Beleuchtungseinheiten umfassen, um skalieren zu können. Eine jede Beleuchtungseinheit kann ein oder mehrere Lichtquellen umfassen. Eine Beleuchtungseinheit ist dann an der Befestigungseinrichtung lösbar befestigt. In Abhängigkeit vom Bedarf können Beleuchtungseinheiten hinzugefügt werden oder abgenommen werden. Es gibt dann elektrische Steckverbindungen, um hinzugefügte Beleuchtungseinheiten mit Strom versorgen und gegebenenfalls mit einer Lichtstärken - Regelung verbinden zu können.

Die Lichtquellen des Systems können in einer ersten Ebene angeordnet sein. Die Kamera kann hinter der Ebene angeordnet sein. Bei einer solchen Anordnung ist es möglich, dass während der Durchführung des Verfahrens die Lichtquellen näher bei den zu bewertenden Solarzellen sind als die Kamera. Hierdurch gelingt besonders gut eine homogene und lichtstarke Ausleuchtung der zu bewertenden Solarzellen. Weil die Kamera einen größeren Abstand zu den Solarzellen aufweist, kann eine kleine Brennweite genügen, um dennoch eine große Fläche fotografieren zu können.

Durch Verwendung von leistungsstarken Light-Emitting-Devices (LEDs) kann das Gewicht des Systems besonders geringgehalten werden.

Das System kann mobil, leicht und flexibel sein, damit dieses mit geringem Kraftaufwand beispielsweise manuell gehalten und ausgerichtet werden kann.

Die Brennweite der Kamera kann auf den Bedarf abgestimmt werden. Eine große Brennweite kann ausgewählt worden sein, wenn der Abstand zwischen Solarmodul und Kamera gering sein soll und dennoch durch ein Foto die gesamte Oberfläche des Solarmoduls erfasst werden soll. Eine kleine Brennweite kann ausgewählt worden sein, wenn der Abstand zwischen Solarmodul und Kamera gering sein soll und durch ein Foto nur ein Teil einer Oberfläche des Solarmoduls erfasst werden soll.

Eine Aufhängung für die Befestigungseinrichtung des Systems kann flexibel gestaltet sein, um kleine und große Bodenunebenheiten und Löcher, v.a. bei Freiflächenanlagen, dreidimensional ausgleichen zu können. Da das Gewicht gering sein kann, kann das System dann mit Hilfe von Abstandshaltern auf Solarmodulen abgestellt werden, ohne diese zu beschädigen. Ein Drohnen-basiertes System ist möglich.

Das Hauptproblem bei qualitativ und quantitativ verwertbaren Fotolumineszenz - Aufnahmen ist die lineare Abhängigkeit des Fotolumineszenz - Signals zur Anregungsintensität. Mit den vorgesehenen Kameras können sehr geringe Intensitäten in dem beispielsweise für Silizium passendem Spektrum detektiert werden. Zusätzlich kann durch die Erfindung ein übliches Solarmodul vollständig hinreichend homogen beleuchtet werden.

Zu den Fehlern, die durch die Erfindung ermittelt werden können, zählen Risse, Zellauffälligkeiten oder inaktive Flächen.

Großflächige Defekte wie Potential-Induced-Degradation (PID), andere Defekte mit Reduktion des Parallelwiederstandes oder Moduldefekte wie kurzgeschlossene Bypassdioden sind bei schlechter Homogenität der Beleuchtung nicht oder schwerer erkennbar. Durch die Erfindung kann eine hinreichende Homogenität erzielt werden, um auch solche Defekte erkennen zu können.

Die Homogenität hat einen Einfluss auf die Erkennung aller Defektsignaturen und kann diese sowohl erschweren wie auch vereinfachen. Erfindungsgemäß kann auch eine inhomogene Ausleuchtung erzielt werden, falls dadurch die Erkennung von Defekten vereinfacht werden kann.

Die Erfindung ermöglicht eine vollflächige Beleuchtung der Oberfläche eines üblich großen Solarmoduls, aber auch von einzelnen Solarzellen. Flächen zwischen der Größe einer Solarzelle (etwa 250 cm²) bis zur Größe der Oberfläche eines Solarmoduls (etwa 1.6m²) können beleuchtet werden.

Um die Homogenität auf die Erkennung aller Defektsignaturen für jedes Modul anzupassen, sind die Lichtquellen flexibel steuerbar.

Die Erfindung ermöglicht eine Integration der Kamera und Lichtquellen, beispielsweise **LED** Module, in eine Drohne. Um den Strombedarf gering halten zu können, kann die Lichtstärke geringgehalten werden. Die zu untersuchenden Flächen können bei Bedarf entsprechend klein gewählt werden. Durch eine Mehrzahl von Fotos von Teilflächen eines Solarmoduls kann ein Solarmodul vollständig mit hoher Auflösung bewertet werden.

Durch die Erfindung kann ein handgehaltenes System bereitgestellt werden. Dieses kann so klein sein, dass Fotos zwar nur von Teilflächen eines Solarmoduls gemacht werden können. Durch Fotos von verschiedenen Teilflächen können Solarmodule jedoch vollständig überprüft werden und dann auch mit besonders hoher Auflösung. Ein handgehaltenes System kann aber auch so dimensioniert sein, dass ein Solarmodul üblicher Größe vollständig gleichmäßig ausgeleuchtet werden kann, um mit nur einem Foto das gesamte Solarmodul bewerten zu können.

Beim Handgehaltenen System sollte darauf geachtet werden, dass das Gewicht soweit reduziert wird, damit dieses durch nur einen Benutzer handelbar bleibt.

Der Abstand zwischen Solarmodulen einerseits und Kamera/Beleuchtungseinheit andererseits ist vorzugsweise gering, um lichtschwächere und damit besonders leichte Lichtquellen einsetzen zu können. Dies kann durch Einsatz eines Objektivs mit großer Brennweite kompensiert werden. Solarmodule können bei einem solchen Betrieb gescannt werden. Durch einen kurzen Abstand und das Scannen müssen die Lichtquellen nicht ständig ausgerichtet werden, um homogene Einstrahlungen abzubilden. Vielmehr kann im handgehaltenen Betrieb die ideale Ausrichtung der Kamera/Beleuchtungseinheit zu den Solarmodulen durch den Benutzer manuell eingestellt werden. Lichtquellen und Kamera können dann eine Baueinheit sein.

Während der Durchführung des Verfahrens können in einer Ausgestaltung der Erfindung Lichtquellen sich in einer Ebene befinden und die Kamera ist hinter dieser Ebene angeordnet.

Eine Nachbearbeitung und Zusammensetzung von gemachten Fotos oder Fotosequenzen zu einer Gesamtaufnahme ist möglich (Stiching). Eine Erhöhung der Auflösung mit Superresolution- Algorithmen aus Fotos oder Fotosequenzen ist möglich.

Durch die Erfindung kann die Beleuchtungsintensität variiert werden, um Verhalten der Zellen und damit ggf. Defektmuster erkennen zu können.

Durch die Erfindung können hohe Beleuchtungsintensitäten erreicht werden. Bis zu 1000 W/m² hat sich als möglich herausgestellt.

Nachfolgend wird die Erfindung anhand von Figuren näher erläutert. Es zeigen
- Figur 1:: Schemazeichnung des Aufbaus und der Perspektivenunterschied zwischen Lampenfeld und Anstellwinkel eines Solarmoduls;
- Figur 2:: Beispiel einer Aufnahme für die Perspektivenverzerrung;
- Figur 3:: Drohne mit Lichtquellen und Kamera;
- Figur 4:: Skizze von Komponenten.

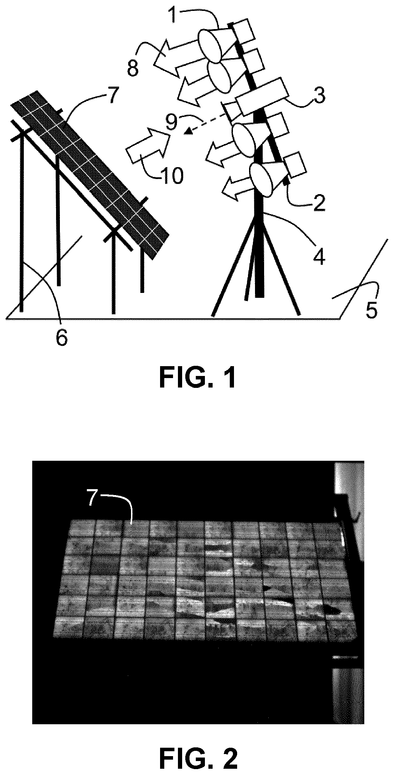

Die Figur 1 zeigt eine schematische Darstellung eines erfindungsgemäßen Systems. Das System umfasst eine Beleuchtungseinrichtung mit vier Lichtquellen 1. Die vier Lichtquellen 1 sind an einer Befestigungseinrichtung 2 beweglich befestigt. Eine jede Lichtquelle kann in drei Raumrichtungen verschwenkt werden. Die Befestigungseinrichtung 2 ist eine Stange oder ein Rohr. Die vier Lichtquellen sind entlang einer Geraden angeordnet. Da eine Gerade in einer Ebene liegen kann, sind die Lichtquellen auch innerhalb einer Ebene angeordnet.

Mit einer nicht dargestellten Lichtstärken - Regelung kann die Lichtstärke einer jeden Lichtquelle geändert werden und zwar unabhängig von den anderen Lichtquellen. Eine jede Lichtquelle kann auch unabhängig von den anderen Lichtquellen vollständig ausgeschaltet werden.

Eine Kamera 3 ist an der Befestigungseinrichtung 2 befestigt. Die Kamera 3 ist in der Mitte zwischen den Lichtquellen 1 angebracht. Die Kameramontage erfolgt also im Zentrum des Lichtes, das durch die Lichtquellen 1 erzeugt werden kann.

Die Befestigungseinrichtung 2 ist beweglich an einem Ständer 4 befestigt. Der Ständer 4 steht auf dem Untergrund 5, auf dem das Ständerwerk 6 für das Solarmodul 7 steht.

Die Lichtquellen 1 sind so ausgerichtet, dass durch die Lichtquellen ausgesendetes Licht 8 auf die zu beleuchtende Oberfläche des Solarmoduls 7 auftrifft.

Zunächst wurde die Befestigungseinrichtung 2 relativ zur zu beleuchtenden Oberfläche des Solarmoduls 7 und damit relativ zur Oberfläche der zu beleuchtenden Solarzellen so ausgerichtet, dass die Kameraachse 9 der Kamera 3, also die Blickrichtung der Kamera 3, möglichst senkrecht und mittig auf die Oberfläche der zu bewertenden Solarzellen auftrifft. Dafür wurde die Befestigungseinrichtung 2 so verschwenkt, dass dieses möglichst parallel zur zu beleuchtenden Oberfläche des Solarmoduls 7 verläuft. Die Figur 1 zeigt den Fall, dass dies nur näherungsweise möglich war. Im Anschluss daran wurden die Lichtquellen 1 so ausgerichtet, dass diese möglichst gleichmäßig und vollflächig die zu beleuchtenden Oberfläche des Solarmoduls 7 ausleuchten können. Wie die Figur 1 zeigt, weisen obere Lichtquellen 1 einen größeren Abstand zur zu beleuchtenden Oberfläche des Solarmoduls 7 auf als untere Lichtquellen 1. Um dies auszugleichen, sendet die obere Lichtquelle 1 mit einer größeren Lichtstärke Licht 8 aus als darunterliegende Lichtquellen 1. Dies wird die durch die Größe der Pfeile 8 angedeutet, die das Aussenden von Licht darstellen. Je tiefer eine Lichtquelle 1 angeordnet ist, umso kleiner ist der Pfeil und umso kleiner die Lichtstärke. Auf diese Weise gelingt eine gleichmäßige Ausleuchtung der zu beleuchtenden Oberfläche des Solarmoduls 7. Die zu beleuchtende Oberfläche ist die Oberfläche, die zu beleuchten ist, um mithilfe der Solarzellen des Solarmoduls 7 Strom erzeugen zu können.

Im Anschluss an die erzielte möglichst gleichmäßige Ausleuchtung wird mit der Kamera 3 ein Foto von den zu bewertenden Solarzellen aufgenommen. Fotografiert wird das Licht 10, das aufgrund der Beleuchtung durch die Lichtquellen 1 durch die Solarzellen erzeugt wird. Mithilfe des aufgenommenen Fotos werden die Solarzellen des Solarmoduls bewertet.

In der Figur 1 werden vier Lichtquellen 1 gezeigt. Die Zahl der Lichtquellen 1 kann aber größer oder kleiner sein. Eine Obergrenze von zwölf Lichtquellen 1 hat sich als praktikabel erwiesen. Als Lichtquellen 1 haben sich 100 W COB LEDs als geeignet herausgestellt. Zwölf solcher Lichtquellen sind für die homogene Beleuchtung eines vollen Solarmodules ausreichend. Die LEDs einer jeden Lichtquelle können auf einem LED-Modul mit Lüfter und Steuerplatine montiert sein. Als Optik kann für jede Lichtquelle ein Parabolspiegel mit eingeklebten Kurzpassfilter (zum Beispiel ein Wärmeschutzglas von Schott "KG5") vorhanden sein. Der Parabolspiegel lenkt das erzeugte Licht in eine gewünschte Richtung. Das Licht passiert erst den Kurzpassfilter, bevor das Licht die Lichtquelle 1 verlässt. Die Stromversorgung kann mit geeigneten Netzgeräten oder Batterien erfolgen.

Die Kamera 3 ist so ausgewählt, dass diese das Licht detektieren kann, das von den Solarzellen durch Rekombination von Ladungsträgern erzeugt wird. Ein Langpassfilter mit einer Cut-On Wellenlänge von 970 nm wird verwendet, um zuverlässig das Licht herauszufiltern, das von den Solarzellen durch Rekombination von Ladungsträgern erzeugt wird. Das durch Rekombination von Ladungsträgern erzeugte Licht passiert erst den Langpassfilter, bevor dieses auf das lichtempfindliche Material der Kamera auftreffen kann.

Ein in der Figur 1 nicht gezeigter Steuercomputer für die Kamera und für Algorithmen zur Optimierung der Homogenität der Beleuchtung durch Steuerung der LED-Anregungsintensität kann vorhanden sein.

Mit einem System, wie dieses in der Figur 1 gezeigt wird, kann flexibel und schnell auf die Perspektivenverzerrung der Solarmodule für jede Position eines Solarmoduls reagiert werden, um homogen beleuchten zu können. Die Flexibilität der Lichtquellen 1 kann für jede Defektsignatur, die für die beste Erkennungsrate nötige Anregungsverteilung erzeugen. Dies kann automatisiert werden. Nach Aufnahme eines Testfotos kann eine Justierung erfolgen. Anhand eines nächsten Testfotos kann das Ergebnis geprüft werden, um ggfs. die Justierung fortzusetzen. Fotos einer vollständigen Oberfläche eines üblich großen Solarmodules sind auch unter schwierigen äußeren Bedingungen ohne physischen und elektrischen Kontakt zu dem Solarmodul möglich.

Die Figur 2 zeigt ein Foto von einem rechteckigen Solarmodul, wenn die Kameraachse nicht exakt senkrecht auf die zu beleuchtende Oberfläche des Solarmoduls auftrifft. Das Foto verdeutlicht, dass das Solarmodul auf dem Foto nur näherungsweise rechteckig gezeigt wird.

Im Beispielfall der Figur 2 beträgt das Verhältnis der oberen und unteren Solarmodulkanten ca. 1,14. Mit der Annahme einer quadratischen Intensitätsreduzierung einer LED-Anregungsstrahlung müssten die LEDs, die die Solarmoduloberseite beleuchten, ca. 30% mehr Leistung erbringen, um eine ausreichend hohe Homogenität zu erreichen. Es gelingt also in einem solchen Fall, durch Regelung der Lichtstärken dennoch eine hinreichend homogene Beleuchtung zu erzielen.

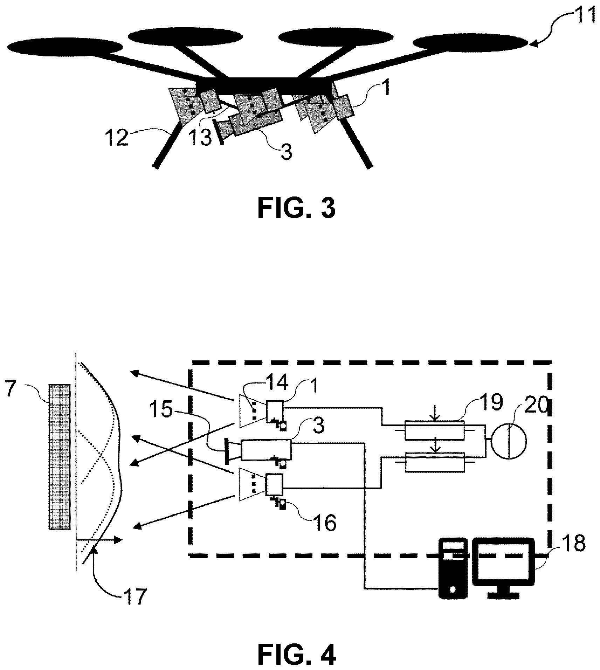

In der Figur 3 wird eine Drohne 11 gezeigt, an der die Kamera 3 und die Lichtquellen 1 beweglich befestigt sind. Insgesamt sind sechs beweglich befestigte Lichtquellen 1 vorhanden. Diese sind zu beiden Seiten an Beinen 12 bzw. an einer Strebe 13 beweglich befestigt. Lichtquellen 1 an einer Seite der Drohne weisen untereinander gleiche Abstände auf. Mittig unterhalb des Gehäuses der Drohne 11 ist die Kamera 3 angeordnet. Beine 12 und Strebe 13 dienen als Teile der Befestigungseinrichtung.

Die Figur 4 zeigt ein Solarmodul 7, das von zwei Lichtquellen 1 mit Kurzpassfilter 14 beleuchtet werden. Die beiden Lichtquellen 1 sind so ausgerichtet, dass das Solarmodul 7 möglichst homogen beleuchtet wird, wie diese durch die Helligkeitsverteilung 17 auf der Oberfläche des Solarmoduls 7 angedeutet wird. Durch die Kamera 3 mit dem Langpassfilter 15 werden Fotos von der Oberfläche des Solarmoduls 7 gemacht. Die Kamera 3 und die Lichtquellen 1 sind beweglich durch eine Befestigung 16 angebracht und können wie angedeutet um zwei zueinander senkrechte Achsen verschwenkt werden. Durch Potenziometer 19 können die Lichtstärken der Lichtquellen 1 verändert werden. Es gibt eine Stromversorgung 20 für die Lichtquellen 1. Die Kamera 3 wird über einen Computer 18 mit elektrischem Strom versorgt.

## Patentansprüche

1. Verfahren für eine Bewertung von Solarzellen mit ein oder mehrere Lichtquellen (1), wobei die ein oder mehreren Lichtquellen (1) an einer Befestigungseinrichtung (2) befestigt sind, wobei die ein oder mehreren Lichtquellen (1) beweglich an der Befestigungseinrichtung (2) befestigt sind und/oder eine Lichtstärken - Regelung (19) vorhanden ist, mit der die Lichtstärke einer jeden Lichtquelle (1) unabhängig von der Lichtstärke der anderen Lichtquellen (1) geändert werden kann, mit einer Kamera (3), die an der Befestigungseinrichtung (2) befestigt ist, wobei das Verfahren folgende Schritte umfasst, die Befestigungseinrichtung (2) wird mithilfe der Kamera (3) relativ zu Solarzellen so ausgerichtet, dass die Kameraachse (9) der Kamera (3) senkrecht relativ zur Oberfläche der zu bewertenden Solarzellen verläuft, die ein oder mehreren Lichtquellen (1) werden so ausgerichtet und / oder die Lichtstärke der ein oder mehreren Lichtquellen (1) werden so geregelt, dass die zu bewertenden Solarzellen möglichst gleichmäßig ausgeleuchtet werden, im Anschluss an die möglichst gleichmäßige Ausleuchtung wird mit der Kamera (3) ein Foto von den zu bewertenden Solarzellen aufgenommen, mithilfe des Fotos werden die Solarzellen bewertet.

2. Verfahren nach dem vorhergehenden Anspruch, **dadurch gekennzeichnet, dass** die Lichtquellen (1) in einer Ebene angeordnet sind.

3. Verfahren nach einem der vorhergehenden Ansprüche, **dadurch gekennzeichnet, dass** nicht mehr als zwanzig Lichtquellen (1) und/ oder wenigstens vier Lichtquellen (1) vorhanden sind.

4. Verfahren nach einem der vorhergehenden Ansprüche, **dadurch gekennzeichnet, dass** eine jede Lichtquelle (1) ein oder mehrere LEDs umfasst.

5. Verfahren nach einem der vorhergehenden Ansprüche, **dadurch gekennzeichnet, dass** die Lichtquellen (1) einen Kurzpassfilter (14) für das erzeugte Licht umfassen und die Kamera (3) einen Langpassfilter (15) für das von der Kamera (3) empfangene Licht.

6. Verfahren nach einem der vorhergehenden Ansprüche, **dadurch gekennzeichnet, dass** die Kamera (3) für die Detektion von Licht lichtempfindliches Silizium oder lichtempfindliches Indium Gallium Arsenid (InGaAs) umfasst.

7. Verfahren nach einem der vorhergehenden Ansprüche, **dadurch gekennzeichnet, dass** ein in Aufsicht gesehenes rechteckiges Solarmodul (7) die zu bewertenden Solarzellen umfasst und die Befestigungseinrichtung (2) so ausgerichtet wird, dass das Solarmodul (7) auf einem mit der Kamera (3) gemachten Foto möglichst rechteckförmig gezeigt wird.

8. Verfahren nach einem der vorhergehenden Ansprüche, **dadurch gekennzeichnet, dass** die Befestigungseinrichtung (2) an einer Drohne (11) befestigt ist und die Ausrichtung der Befestigungseinrichtung (2) durch die Drohne (11) erfolgt.

9. Verfahren nach einem der vorhergehenden Ansprüche, **dadurch gekennzeichnet, dass** die ein oder mehreren Lichtquellen (1) mit Hilfe von ein oder mehreren Antrieben bewegt werden können.

10. Verfahren nach einem der vorhergehenden Ansprüche, **dadurch gekennzeichnet, dass** Abstandshalter vorhanden sind und mithilfe der Abstandshalter die Befestigungseinrichtung (2) ausgerichtet wird.

11. Verfahren nach dem vorhergehenden Anspruch, **dadurch gekennzeichnet, dass** die Abstandshalter für das Ausrichten auf Solarmodulen ausgesetzt sind, die benachbart zu einem Solarmodul angeordnet sind, das die zu bewertenden Solarzellen umfasst.

12. Verfahren nach einem der vorhergehenden Ansprüche, **dadurch gekennzeichnet, dass** ein flächiges fluoreszierendes oder phosphoreszierendes Material auf die Solarzellen aufgelegt wird, die bewertet werden sollen, und das flächige fluoreszierende oder phosphoreszierende Material durch die ein oder mehreren Lichtquellen (1) beleuchtet wird und im Anschluss an die Beleuchtung ein Foto von der Strahlung gemacht wird, die durch das fluoreszierende Material oder das phosphoreszierende Material erzeugt wird.

13. System für die Durchführung eines Verfahrens nach einem der vorhergehenden Ansprüche mit einer Befestigungseinrichtung (2) und einem an der Befestigungseinrichtung (2) ein oder mehreren Lichtquellen (1), wobei die ein oder mehreren Lichtquellen (1) beweglich an der Befestigungseinrichtung (2) angebracht sind und/oder eine Lichtstärken - Regelung (19) vorhanden ist, mit der die Lichtstärke einer jeden Lichtquelle (1) unabhängig von der Lichtstärke der anderen Lichtquellen (1) geändert werden kann, mit einer Kamera (3), die an der Befestigungseinrichtung (2) befestigt ist, wobei die ein oder mehreren Lichtquellen (1) so beschaffen sind, dass diese nur kurzwelliges Licht senden können und die Kamera (3) so beschaffen ist, dass diese nur langwelliges Licht für die Aufnahme eines Fotos empfangen kann.

14. System nach dem vorhergehenden Anspruch mit einer Drohne, an dem die Befestigungseinrichtung (2) befestigt ist.

15. System nach einem der zwei vorhergehenden Ansprüche, **dadurch gekennzeichnet, dass** das System drei bis zwölf Lichtquellen (1) umfasst.

## Claims

1. Method for assessing solar cells with one or more light sources (1), wherein the one or more light sources (1) are fastened to a fastening device (2), wherein the one or more light sources (1) are fastened movably to the fastening device (2) and/or a light intensity control (19) is present, with which the light intensity of each light source (1) can be changed independently of the light intensity of the other light sources (1), with a camera (3) which is fastened to the fastening device (2), wherein the method comprises the following steps, the fastening device (2) is aligned relative to solar cells using the camera (3) in such a way that the camera axis (9) of the camera (3) is perpendicular relative to the surface of the solar cells to be assessed, the one or more light sources (1) are aligned in such a way and/or the light intensity of the one or more light sources (1) are controlled in such a way that the solar cells to be assessed are illuminated as uniformly as possible, following the illumination that is as uniform as possible, a photo of the solar cells to be assessed is taken with the camera (3), the solar cells are assessed using the photo.

2. Method according to the preceding claim, **characterized in that** the light sources (1) are arranged in one plane.

3. Method according to one of the preceding claims, **characterized in that** not more than twenty light sources (1) and/or at least four light sources (1) are present.

4. Method according to one of the preceding claims, **characterized in that** each light source (1) comprises one or more LEDs.

5. Method according to one of the preceding claims, **characterized in that** the light sources (1) comprise a short-pass filter (14) for the generated light and the camera (3) comprises a long-pass filter (15) for the light received by the camera (3).

6. Method according to one of the preceding claims, **characterized in that** the camera (3) comprises photosensitive silicon or photosensitive indium gallium arsenide (InGaAs) for the detection of light.

7. Method according to one of the preceding claims, **characterized in that** a rectangular solar module (7) seen in plan view comprises the solar cells to be assessed and the fastening device (2) is aligned in such a way that the solar module (7) is shown as rectangular as possible on a photo taken with the camera (3).

8. Method according to one of the preceding claims, **characterized in that** the fastening device (2) is fastened to a drone (11) and the alignment of the fastening device (2) is performed by the drone (11).

9. Method according to one of the preceding claims, **characterized in that** the one or more light sources (1) can be moved by means of one or more drives.

10. Method according to one of the preceding claims, **characterized in that** spacers are present and the fastening device (2) is aligned by means of the spacers.

11. Method according to the preceding claim, **characterized in that** the spacers for the alignment are placed on solar modules arranged adjacent to a solar module comprising the solar cells to be assessed.

12. Method according to one of the preceding claims, **characterized in that** a sheet-like fluorescent or phosphorescent material is placed on the solar cells to be assessed, and the sheet-like fluorescent or phosphorescent material is illuminated by the one or more light sources (1) and, following the illumination, a photo is taken of the radiation produced by the fluorescent material or the phosphorescent material.

13. System for performing a method according to one of the preceding claims with a fastening device (2) and one or more light sources (1) fastened to the fastening device (2), wherein the one or more light sources (1) are movably fastened to the fastening device (2) and/or a light intensity control (19) is present, with which the light intensity of each light source (1) can be changed independently of the light intensity of the other light sources (1), with a camera (3) which is fastened to the fastening device (2), wherein the one or more light sources (1) are such that they can only transmit short-wave light and the camera (3) is such that it can only receive long-wave light for taking a photo.

14. System according to the preceding claim comprising a drone to which the fastening device (2) is fastened.

15. System according to one of the two preceding claims, **characterized in that** the system comprises three to twelve light sources (1).

## Revendications

1. Procédé d'évaluation de cellules solaires avec une ou plusieurs sources lumineuses (1), dans lequel les unes ou plusieurs sources lumineuses (1) sont fixées à un dispositif de fixation (2), dans lequel les unes ou plusieurs sources lumineuses (1) sont fixées de manière mobile au dispositif de fixation (2) et/ou une régulation d'intensité lumineuse (19) est présente, avec laquelle l'intensité lumineuse de chaque source lumineuse (1) peut être modifiée indépendamment de l'intensité lumineuse des autres sources lumineuses (1), avec une caméra (3) fixée au dispositif de fixation (2), dans lequel le procédé comprend des étapes suivantes, le dispositif de fixation (2) est orienté à l'aide de la caméra (3) par rapport aux cellules solaires de telle sorte que l'axe (9) de la caméra (3) s'étend perpendiculairement par rapport à la surface des cellules solaires à évaluer, les unes ou plusieurs sources lumineuses (1) sont orientées et/ou l'intensité lumineuse des unes ou plusieurs sources lumineuses (1) sont réglées de telle sorte que les cellules solaires à évaluer sont éclairées le plus uniformément possible, à la suite de l'éclairage le plus uniforme possible, une photo des cellules solaires à évaluer est prise avec la caméra (3), les cellules solaires sont évaluées à l'aide de la photo.

2. Procédé selon la revendication précédente, **caractérisé en ce que** les sources lumineuses (1) sont disposées dans un plan.

3. Procédé selon l'une des revendications précédentes, **caractérisé en ce que** pas plus de vingt sources lumineuses (1) sont présentes et/ou qu'au moins quatre sources lumineuses (1) sont présentes.

4. Procédé selon l'une des revendications précédentes, **caractérisé en ce que** chaque source lumineuse (1) comprend une ou plusieurs **DEL.**

5. Procédé selon l'une des revendications précédentes, **caractérisé en ce que** les sources lumineuses (1) comprennent un filtre passe court (14) pour la lumière générée et la caméra (3) comprend un filtre passe long (15) pour la lumière reçue par la caméra (3).

6. Procédé selon l'une des revendications précédentes, **caractérisé en ce que** la caméra (3) comprend, pour la détection de la lumière, du silicium photosensible ou de l'arséniure d'indium gallium (InGaAs) photosensible.

7. Procédé selon l'une des revendications précédentes, **caractérisé en ce qu'**un module solaire (7) rectangulaire vu en plan comprend les cellules solaires à évaluer et **en ce que** le dispositif de fixation (2) est orienté de manière à ce que le module solaire (7) est montré en forme la plus rectangulaire possible sur une photo prise avec la caméra (3).

8. Procédé selon l'une des revendications précédentes, **caractérisé en ce que** le dispositif de fixation (2) est fixé à un drone (11) et **en ce que** l'orientation du dispositif de fixation (2) est réalisée par le drone (11).

9. Procédé selon l'une des revendications précédentes, **caractérisé en ce que** les unes ou plusieurs sources lumineuses (1) peuvent être déplacées à l'aide d'un ou plusieurs entraînements.

10. Procédé selon l'une des revendications précédentes, **caractérisé en ce que** des entretoises sont présentes et **en ce que** le dispositif de fixation (2) est orienté à l'aide des entretoises.

11. Procédé selon la revendication précédente, **caractérisé en ce que** les entretoises pour l'orientation sont exposées sur des modules solaires qui sont disposés de manière adjacente à un module solaire qui comprend les cellules solaires à évaluer.

12. Procédé selon l'une des revendications précédentes, **caractérisé en ce qu'**un matériau fluorescent ou phosphorescent en nappe est appliqué sur les cellules solaires, qui doivent être évaluées, et que le matériau fluorescent ou phosphorescent en nappe est éclairé par les unes ou plusieurs sources lumineuses (1) et, à la suite de l'éclairage, une photo est prise du rayonnement qui est produit par le matériau fluorescent ou phosphorescent.

13. Système pour la mise en œuvre d'un procédé selon l'une des revendications précédentes avec un dispositif de fixation (2) et une ou plusieurs sources lumineuses (1) au dispositif de fixation (2), dans lequel les unes ou plusieurs sources lumineuses (1) sont montées de manière mobile au dispositif de fixation (2) et/ou une régulation d'intensité lumineuse (19) est présente, avec laquelle l'intensité lumineuse de chaque source lumineuse (1) peut être modifiée indépendamment de l'intensité lumineuse des autres sources lumineuses (1), avec une caméra (3) qui est fixée au dispositif de fixation (2), dans lequel les unes ou plusieurs sources lumineuses (1) sont conçues de telle sorte qu'elles ne peuvent transmettre que de la lumière à ondes courtes et la caméra (3) est conçue de telle sorte qu'elle ne peut recevoir que de la lumière à ondes longues pour la prise d'une photo.

14. Système selon la revendication précédente avec un drone auquel est fixé le dispositif de fixation (2).

15. Système selon l'une des deux revendications précédentes, **caractérisé en ce que** le système comprend de trois à douze sources lumineuses (1).
